# EUROPEAN PATENT SPECIFICATION

(11) **EP 2 634 980 B1**
(45) Date of publication and mention of the grant of the patent: **22.08.2018**
(21) Application number: 11844670.7
(22) Date of filing: 15.03.2011
(51) Int. Cl.: H04L 29/06, H04L 12/66, H04M 3/22, H04W 24/00

(54) **METHOD AND APPARATUS FOR INTERCEPTING MEDIA CONTENTS IN IP MULTIMEDIA SUBSYSTEM**
VERFAHREN UND VORRICHTUNG ZUM ABFANGEN VON MEDIENINHALTEN IN EINEM IP-MULTIMEDIA-SUBSYSTEM
PROCÉDÉ ET DISPOSITIF POUR INTERCEPTER DU CONTENU MULTIMÉDIA DANS UN SOUS-SYSTÈME MULTIMÉDIA IP

(30) Priority: 02.12.2010 CN 201010571292
(43) Date of publication of application: 04.09.2013
(73) Proprietor: ZTE Corporation, Shenzhen, Guangdong 518057 (CN)
(72) Inventor: GAO, Yang, Shenzhen Guangdong 518057 (CN); MU, Lingjiang, Shenzhen Guangdong 518057 (CN)
(74) Representative: HGF Limited
(86) International application number: PCT/CN2011/071826
(87) International publication number: WO 2012/071829

(56) References cited:
- WO-A1-2005/069663
- WO-A1-2008/013482
- CN-A- 101 110 715
- CN-A- 101 141 761
- CN-A- 101 562 810

## Description

### Technical Field

The present document relates to the intercepting technology in an Internet Protocol (IP) Multimedia Subsystem (IMS) network framework, and in particular, relates to a method and apparatus for intercepting media contents in the IMS.

### Background of the Related Art

The Internet Protocol Multimedia Subsystem (IMS) is the development direction of the multimedia communication in the future, and it is the most important constituent part of the next generation network as well. It is a subsystem supporting the IP multimedia service that is put forward in the Third Generation Partnership Project (3GPP). Wherein, its notable feature is to adopt the Session Initial Protocol (SIP) system where the communication has nothing to do with the access way, and it can possess many kinds of abilities, such as, separating many kinds of multimedia service control functions with the bearing capacity, separating the calling and the session, separating the application and the services, separating the service and the network, and merging the mobile network and the Internet services, etc.

Just because the communication skill becomes stronger and stronger, and went deep into all respects of the society and life, the situation of utilizing the communication technology to be engaged in the illegal criminal activity also becomes serious day by day. The legal interception technology becomes a powerful weapon by which the security departments of various countries attack the criminal activities. The legal interception refers to that, due to the need of enforcing the law, the security organization sets a particular interception target on the communication device to intercept the session event and the communication content of the intercepted target, which is the essential function in the communication field. The standard organizations, such as, the European Telecommunications Standards Institute (ETSI), the 3GPP, etc., establish the relevant standard of the legal interception. Now the legal interception in the IMS network field has formed a corresponding standard, and can guide specific implementation.

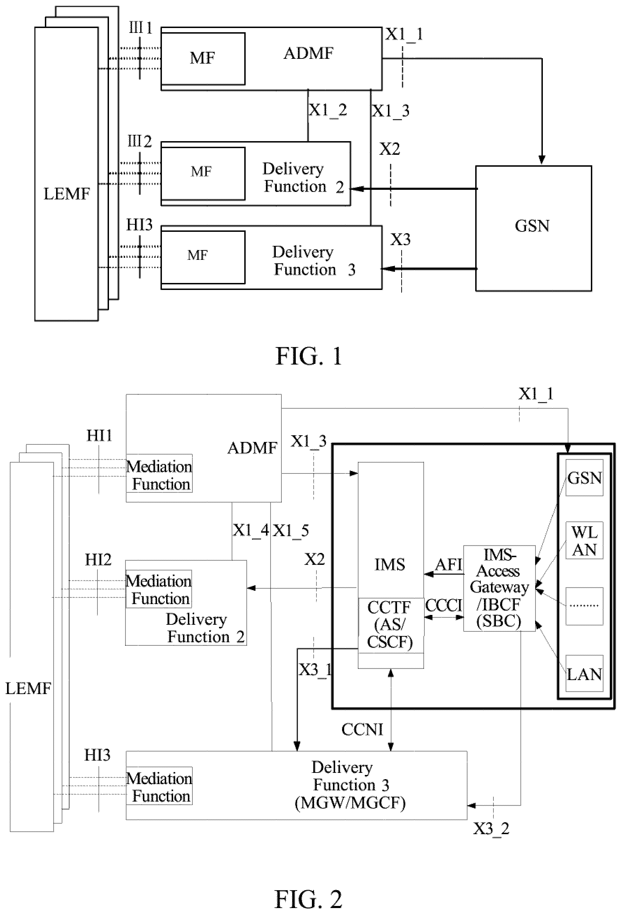

FIG. 1 is a diagram of a legal interception framework of 3GPP packet switching. As shown in FIG. 1, the 3GPP provides one kind of legal interception standard in the IMS packet switch (PS) network field. Wherein, the interception is implemented on the basis of the following three interfaces:
HI1 interface, used for implementing monitoring control management;
HI2 interface, used for reporting Intercept Related Information (IRI) communicated by the intercepted target;
HI3 interface, used for outputting the Communication Content (CC) of the intercepted target;
the bearer layer networks are monitored respectively through the HI1, the HI2 interface message is outputted to the control layer device, such as the Call Session Control Function (CSCF), and the HI3 communication contents are outputted to the bearer layer network. In the figure, X1 to X3 are the interfaces corresponding to the HI1 interface to the HI3 interface respectively, which connect the IMS and the GSN.

The standard can be applied to the interception system including a Law Enforcement Monitoring Facility (LEMF), an Administration Function (ADMF), a data Delivery Function2 (DF2), a data Delivery Function3 (DF3) and an interception device Gigabyte System Network (GSN).

The LEMF informs the ADMF of the interception request through the HI1, and the request message carries the information such as the identification of the intercepted target, etc.; the ADMF sends the interception request message to the bearer layer network GSN through the X1_1, which carries the information such as the identification of the intercepted target, etc.; in the IMS field, the ADMF sends the interception request message to the Proxy Call Session Control Function (P-CSCF) / Serving-Call Session Control Function (S-CSCF); the ADMF sends the interception request message to the DF3 through the X1_3, which carries the information such as the identification of the intercepted target, etc.; during the period from the session initiation to the session end, in the IMS field, when the session request is routed through the GSN to the P-CSCF/S-CSCF, and when the P-CSCF/S-CSCF judges that the user is monitored, then the intercepted target is intercepted according to the identification of the intercepted target; the P-CSCF/S-CSCF reports the IRI in the session process to the DF2 through the X2; the GSN reports the CC in the session process to the DF3 through the X3; according to the interception request from the ADMF, the DF2 reports the received IRI on which a Mediation Function (MF) is performed to the LEMF through the HI2; and according to the interception request from the ADMF, the DF3 reports the received CC on which the MF is performed to the LEMF through the HI3.

Nowadays, in practical application, in the next generation network taking the IMS as the core, the types of the bearer layer networks are abundant, including Wireless Local Area Networks (WLAN), Local Area Networks (LAN), etc.. Therefore the legal interception in the IMS network field needs to adapt to all kinds of different networks in the bearer layer, which becomes very difficult. Meanwhile, numerous bearer layer networks are needed to have an ability to implement the interception function, which is very difficult to implement in reality. A lot of devices may be unable to provide the interception function in the current network, which will cause the interception function to be not available.

Document WO2005/069663 teaches a system for Legal Interception within an IMS, wherein the information to be intercepted may be originated at another type of network. The interception is carried out using the standard functional nodes of IMS and a GSN gateway.

### Summary of the Invention

In view of the above, the main object of the present document is to provide a method and apparatus for intercepting media contents in an IP Multimedia Subsystem, and Communication Content (CC) of a session to be intercepted can be reported to the DF3 by the IMS-Access GateWay / IBCF directly.

In order to achieve the above-mentioned object, the technical scheme of the present document is implemented as follows:
In a method, according to independent claim 1, for intercepting media contents in an Internet Protocol (IP) Multimedia Subsystem (IMS), the IMS connects with a bearer layer network through an IMS-Access GateWay/ Interconnection Border Control Function (IBCF); wherein the IMS-Access GateWay/IBCF cannot perform a media negotiation with a data delivery function 3 (DF3) of the IMS; the method comprises:
after receiving a session interception request, the IMS determining information of a port of the DF3 which reports communication contents (CC) of a session to be intercepted for the IMS-Access GateWay/IBCF, and informing the IMS-Access GateWay/IBCF; and
the IMS-Access GateWay/IBCF reporting the CC of the session to the determined port of the DF3.

Preferably, determining information of the port of the DF3 which reports communication contents (CC) of a session to be intercepted for the IMS-Access GateWay/IBCF specially refers to:
a call content trigger function (CCTF) in the IMS determining that the session is intercepted, performing a media negotiation with the DF3 through a call content negotiate interface (CCNI), determining the information of the port of the DF3 which receives the session, and informing the IMS-Access GateWay.

Preferably, determining the information of the port of the DF3 which receives the session specially refers to:
the CCTF sending INVITE message to the DF3 through the CCNI to request for information of the port which receives the CC and is assigned dynamically; and
the DF3 replying with 200OK response message to the CCTF, wherein, the 200OK response message carries the information of the port which receives the session and is assigned dynamically.

Preferably, the CCTF is an Application Server (AS) / Serving-Call Session Control Function (S-CSCF), or a Proxy Call Session Control Function (P-CSCF).

Preferably, when the CCTF is the AS/S-CSCF,
informing the IMS-Access GateWay of the information of the port of the session specifically refers to:
the AS/S-CSCF sends INFO message to the IMS-Access GateWay through a call content control interface (CCCI), wherein, the INFO message carries information of the port which receives the session.

Preferably, when the CCTF is the P-CSCF,
informing the IMS-Access GateWay of the information of the port of the session refers to:
the P-CSCF sends H.248 message to the IMS-Access GateWay through its own internal private interface (application layer gateway, ALG), wherein, the H.248 message carries information of the port which receives the session.

Preferably, the IMS-Access GateWay/IBCF is a Session Border Control (SBC);
the DF3 is a Media GateWay (MGW) / Media GateWay Control Function (MGCF);
the information of the port which receives the session refers to identification information of the port of the DF3 and/or IP address information of the port; and
the bearer layer network is at least one kind of the following networks: a Gigabyte System Network (GSN), a Wireless Local Area Network (WLAN), and a Local Area Network (LAN).

An apparatus, according to independent claim 8, for intercepting media contents in an IP Multimedia Subsystem (IMS), applied in a system in which the IMS connects with a bearer layer network through an IMS-Access GateWay/Interconnection Border Control Function (IBCF); wherein, the IMS-Access GateWay/IBCF cannot perform a media negotiation with a data delivery function 3 (DF3) of the IMS; the apparatus comprises a receiving unit, a determining unit and a informing unit located in the IMS, and a reporting unit located in the IMS-Access GateWay/IBCF;
the receiving unit is configured to receive a session interception request;
the determining unit is configured to determine information of a port which reports communication contents (CC) of a session to be intercepted for the IMS-Access GateWay/IBCF;
the informing unit is configured to inform the IMS-Access GateWay/IBCF of the information of the port; and
the reporting unit is configured to report the CC of the session to the determined port.

Preferably, the determining unit and the informing unit are located in a call content trigger function (CCTF) in the IMS, and the determining unit further comprises:
a determining subunit, configured to trigger a media negotiation subunit when determining that the session is intercepted; and
the media negotiation subunit, configured to perform a media negotiation with the DF3 through a call content negotiate interface (CCNI), wherein, the determining subunit determines the information of the port of the DF3 which receives the session according to a media negotiation result of the media negotiation subunit.

Preferably, the media negotiation subunit further comprises a sending module and a replying module;
the sending module is located in the CCTF, configured to send INVITE message to the DF3 through the CCNI to request for information of the port which receives the CC and is assigned dynamically; and
the replying module is located in the DF3, configured to reply with 200OK response message to the CCTF, wherein, the 200OK response message carries the information of the port which receives the session and is assigned dynamically.

Preferably, the CCTF is an Application Server (AS) / Serving-Call Session Control Function (S-CSCF), or a Proxy Call Session Control Function (P-CSCF).

Preferably, when the CCTF is the AS/S-CSCF, the informing unit further sends INFO message to the IMS-Access GateWay through a call content control interface (CCCI), and the INFO message carries the information of the port which receives the session.

Preferably, when the CCTF is the P-CSCF, the informing unit further sends H.248 message to the IMS-Access GateWay through its own internal private interface (application layer gateway, ALG), and the H.248 message carries the information of the port which receives the session.

Preferably, the IMS-Access GateWay/IBCF is a Session Border Control (SBC);
the DF3 is a Media GateWay (MGW) / Media GateWay Control Function (MGCF);
the information of the port which receives the session refers to identification information of the port of the DF3 and/or IP address information of the port; and
the bearer layer network is at least one kind of the following networks: a Gigabyte System Network (GSN), a Wireless Local Area Network (WLAN), and a Local Area Network (LAN).

In the present document, the IMS and the DF3 directly negotiate about the relevant information of the port of the DF3 which receives the CC of the session to be intercepted, and sends the information to the IMS-Access GateWay / IBCF directly, thus the IMS Access GateWay / IBCF obtains the port relevant information of the CC of the DF3, and, after obtaining the CC of the session to be intercepted, then just sends it to the determined port directly. In the present document, the session can be intercepted without changing the current IMS network greatly, and various bearer layer networks can be compatible because the IMS Access GateWay / IBCF is set.

### Brief Description of Drawings

FIG. 1 is a diagram of a legal interception framework of 3GPP packet switching;
FIG. 2 is a diagram of a legal interception framework of an IMS network of the present document;
FIG. 3 is a flow chart of an AS/S-CSCF interacting with an IMS-Access GateWay / IBCF of the present document;
FIG. 4 is a flow chart a P-CSCF interacting with an IMS-Access GateWay / IBCF of the present document;
FIG. 5 is a composition structural diagram of an apparatus for intercepting media contents in an IP Multimedia Subsystem of the present document;
FIG. 6 is a composition structural diagram of a determining unit of an apparatus for intercepting media contents in an IP Multimedia Subsystem of the present document; and
FIG. 7 is a composition structural diagram of a media negotiation unit of an apparatus for intercepting media contents in an IP Multimedia Subsystem of the present document.

### Preferred Embodiments of the Invention

The basic idea of the present document is to add an IMS-Access GateWay / Interconnection Border Control Function (IBCF) between the IMS network and the bearer layer network, and the IMS-Access GateWay / IBCF directs at the bearer layer network uniformly. In this way, the relevant information in the session establishment process is sent to the IMS through the IMS-Access GateWay / IBCF, and the IMS outputs the IRI. Certainly, the IMS can also output the CC, but there will be a phenomena of media roundabout; because the IMS-Access GateWay / IBCF does not have the media negotiation ability, in the present document, after performing the media negotiation through the IMS and the DF3, the port information reported through the CC is informed to IMS-Access GateWay / IBCF, and the CC is outputted from the IMS-Access GateWay / IBCF to the DF3 directly. Wherein, the IMS-Access GateWay / IBCF can be a Session Border Control (SBC), but is not limited to the device.

FIG. 2 is a diagram of a legal interception framework of an IMS network of the present document; as shown in FIG. 2, compared with the legal interception framework of the 3GPP packet switch shown in FIG. 1, in the legal interception framework of the IMS network of the present document, the bearer layer networks (GSN, WLAN, LAN, etc.) connect with the IMS through the IMS-Access GateWay / IBCF. Every network element and the information interaction mode therebetween are described in detail hereinafter.

The LEMF informs the ADMF of the interception request through the HI1, and the request message carries the information such as the identification of the intercepted target, etc.; the ADMF sends the interception request message to the bearer layer networks GSN/ ... /WLAN/LAN through the X1_1, which carries the information such as the identification of the intercepted target, etc.; the ADMF sends the interception request message to the IMS through the X1_3, which carries the information such as the identification of the intercepted target, etc.; the ADMF sends the interception request message to the DF2 through the X1_4, which carries the information such as the identification of the intercepted target, etc.; the ADMF sends the interception request message to the DF3 through the X1_5, which carries the information such as the identification of the intercepted target, etc.; during the session establishment process, when the session request passes through the GSN/.../WLAN/LAN, the GSN/.../WLAN/LAN determines that the user is monitored, the intercepted target is intercepted according to the identification of the intercepted target, and the session relevant information of the intercepted target is sent to the IMS-Access GateWay / IBCF; the IMS-Access GateWay / IBCF performs the adaptation for the session information sent by the bearer layer networks GSN/.../WLAN/LAN, and then sends the adapted information to the IMS through an Adaptation Function Interface (AFI); according to the interception request from the ADMF, the IMS judges that the user is monitored, processes the session information sent by the IMS-Access GateWay / IBCF, and then reports the IRI event in the session establishment process to the DF2 through the X2; meanwhile, according to the interception request from the ADMF, the IMS judges that the user is monitored, and also can report the CC in the session establishment process to the DF3 through the X3. However, if the CC is reported to the DF3 by the IMS through the X3, there will be a media roundabout problem, that is, firstly the IMS-Access GateWay / IBCF needs to send the CC to the IMS, and then the IMS sends the CC to the DF3. While the media negotiation is an end-to-end media negotiation, and it is not through the IMS, only the Session Description Protocol (SDP) is through the IMS; if the IMS needs to report the CC, it must upload the media to the IMS, that is, the IMS-Access GateWay / IBCF must send the media communication contents to the IMS, in this way, the media negotiation among the ends must be performed through the IMS, that is, it causes the media roundabout; for the above-mentioned problem, in order to solve the media roundabout caused by the IMS reporting the CC, that the IMS-Access GateWay / IBCF reports the CC is adopted. However, reporting the CC by the IMS-Access GateWay / IBCF will bring another problem: because the IMS-Access GateWay / IBCF does not have the media negotiation ability, and further, the Media GateWay (MGW) / Media GateWay Control Function (MGCF) assigns the IP and the port dynamically, when the DF3 is the MGW/MGCF device, the IMS-Access GateWay / IBCF has no ability to perform the media negotiation with the MGW/MGCF and get the dynamically assigned IP and port, so it is unable to report the CC.

Aiming at the problem in the above-mentioned scenario, the technical scheme of the present document is mainly as follows: the IMS and the DF3 (MGW/MGCF) perform the media negotiation for the IP and the port, and after the media negotiation is completed, the IMS informs the IMS-Access GateWay / IBCF of the IP and the port after the media negotiation. In this way, the IMS-Access GateWay / IBCF can report the CC to the DF3 directly. The Call content Trigger Function (CCTF) in the IMS, according to the interception request from the ADMF, judges that the user is monitored, and performs the media negotiation with the DF3 (MGW/MGCF) through the Call content Negotiate Interface (CCNI); wherein, the CCTF can be the AS/CSCF; the CCTF(AS/CSCF) sends the information (about IP and port, etc.) after completing the media negotiation with the DF3 (MGW/MGCF) through the Call Content Control Interface (CCCI) to the IMS-Access GateWay / IBCF; the IMS-Access GateWay / IBCF reports the CC to the DF3 through the media negotiation information sent by the CCTF (AS/CSCF); according to the interception request from the ADMF, the DF2 performs MF processing on the received IRI and then reports it to the LEMF through the HI2; and according to the interception request coming from the ADMF, the DF3performs MF processing on the received CC and then reports it to the LEMF through the HI3.

The above-mentioned CSCF can be the S-CSCF or the P-CSCF.

The CCTF negotiates with the DF3 to control the IMS-Access GateWay / IBCF to output the CC; wherein, the CCTF can be the AS/S-CSCF; the AS/S-CSCF performs the interaction with the IMS-Access GateWay / IBCF through the control interface, and specially the interaction can be performed through the INFO/2000K message.

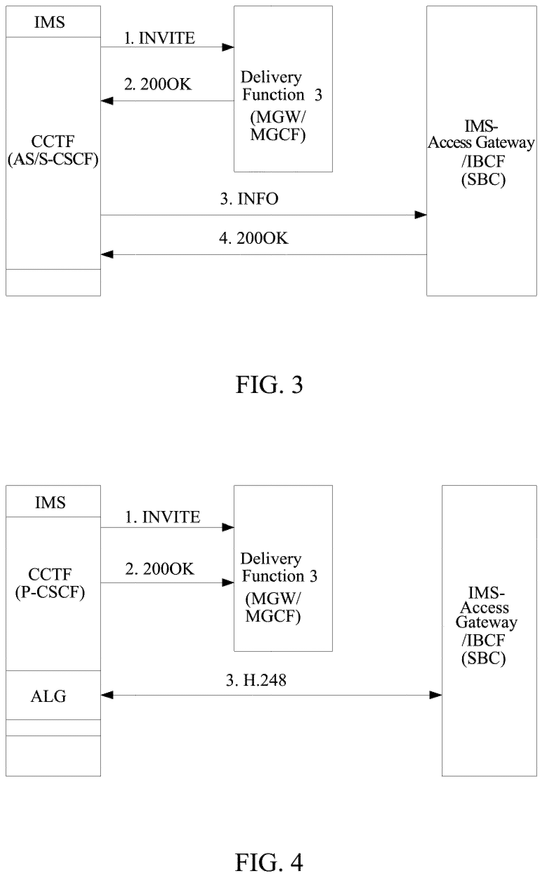

FIG. 3 is a flow chart of an AS/S-CSCF interacting with an IMS-Access GateWay / IBCF of the present document; as shown in FIG. 3, it specially includes the following steps:
1). the AS/S-CSCF sends the INVITE message to the DF3 (MGW/MGCF) to request for the information of the IP and the port, etc. which are assigned dynamically;
2). the DF3(MGW/MGCF) replies with the 200OK response for the INVITE message sent by the AS/S-CSCF, wherein, the INVITE message carries the information of the IP and/or the port, etc. which is assigned dynamically;
3). the DF3 (MGW/MGCF) sends the information of the assigned IP and/or the port, etc. replied by the AS/S-CSCF to the IMS-Access GateWay / IBCF through the INFO message;
4). the IMS-Access GateWay / IBCF replies with the 200OK to the AS/S-CSCF to confirm the reception of the information such as the IP and/or the port, etc.

After receiving the information of the IP and/or the port, etc., the IMS-Access GateWay / IBCF receives the communication contents of the session to be intercepted, and then sends to the received IP and/or the port etc. determined for the session directly. The subsequent processing mode is exactly the same as the prior art, and the implementation details will be no longer described here.

In the present document, the CCTF negotiates with the DF3 to control the IMS-Access GateWay / IBCF to output the CC; wherein, the CCTF can be the P-CSCF; there is an internal private interface, that is, Application layer GateWay (ALG) in the P-CSCF; the P-CSCF performs the information interaction with the IMS-Access GateWay / IBCF through the ALG via the control interface, and specifically the interaction can be performed through the H.248 message. FIG. 4 is a flow chart of a P-CSCF interacting with an IMS-Access GateWay / IBCF of the present document; as shown in FIG. 4, it specially includes the following steps:
1). the P-CSCF sends the INVITE message to the DF3 (MGW/MGCF) to request for the information of the IP and the port, etc. which are assigned dynamically;
2). the DF3(MGW/MGCF) replies with the 200OK response for the INVITE message sent by the P-CSCF, which carries the information of the IP and/or the port, etc. which is assigned dynamically;
3). through its own internal private interface ALG, the P-CSCF sends the information of the IP and/or the port, etc. assigned by the DF3 (MGW/MGCF) to the IMS-Access GateWay / IBCF through the H.248 message.

After receiving the information of the IP and/or the port, etc., the IMS-Access GateWay / IBCF receives the communication contents of the session to be intercepted, and then sends to the IP and/or the port, etc., which is received and determined for the session directly. The subsequent processing mode is exactly the same as the prior art, and the implementation details will no longer be described here.

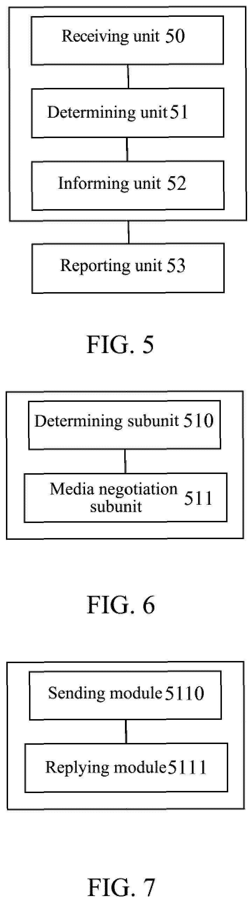

FIG. 5 is a composition structural diagram of an apparatus for intercepting media contents in an IP Multimedia Subsystem of the present document; as shown in FIG. 5, the apparatus is applied in the system in which the IMS connects with the bearer layer network through the IMS-Access GateWay/ IBCF; wherein, the IMS-Access GateWay/IBCF cannot perform the media negotiation with the DF3 of the IMS; the apparatus includes a receiving unit 50, a determining unit 51 and a informing unit 52 located in the IMS, and a reporting unit 53 located in the IMS-Access GateWay/IBCF;
the receiving unit 50 is configured to receive a session interception request;
the determining unit 51 is configured to determine the information of the port which reports the CC of the session to be intercepted for the IMS-Access GateWay/IBCF;
the informing unit 52 is configured to inform the IMS-Access GateWay/IBCF of the information of the port; and
the reporting unit 53 is configured to report the CC of the session to the determined port.

The determining unit 51 and the informing unit 52 are specially located in the CCTF in the IMS. FIG. 6 is a composition structural diagram of a determining unit of an apparatus for intercepting media contents in an IP Multimedia Subsystem of the present document; as shown in FIG. 6, the determining unit 51 of the present document further includes:
a determining subunit 510, configured to trigger the media negotiation subunit when determining that the session is intercepted; and
the media negotiation subunit 511, configured to perform the media negotiation with the DF3 through the CCNI, wherein, the determining subunit 510 determines the information of the port of the DF3 which receives the session according to a media negotiation result of the media negotiation subunit.

FIG. 7 is a composition structural diagram of a media negotiation unit of an apparatus for intercepting media contents in an IP Multimedia Subsystem of the present document; as shown in FIG. 7, the media negotiation subunit 511 of the apparatus for intercepting media contents in the IP Multimedia Subsystem of the present document further includes a sending module and a replying module;
the sending module 5110 is located in the CCTF, configured to send INVITE message to the DF3 through the CCNI to request for information of the port which receives the CC and is assigned dynamically; and
the replying module 5111 is located in the DF3, configured to reply with 200OK response message to the CCTF, wherein, the 200OK response message carries information of the port which receives the session and is assigned dynamically.

The above-mentioned CCTF is an Application Server (AS) / Serving-Call Session Control Function (S-CSCF), or a Proxy Call Session Control Function (P-CSCF).

Wherein, when the CCTF is the AS/S-CSCF, the above-mentioned informing unit 52 further sends INFO message to the IMS-Access GateWay through the CCCI, and the INFO message carries the information of the port which receives the session.

Wherein, when the CCTF is the P-CSCF, the above-mentioned informing unit 52 further sends H.248 message to the IMS-Access GateWay through its own internal private interface (application layer gateway, ALG), and the H.248 message carries the information of the port which receives the session.

The IMS-Access GateWay/IBCF is a Session Border Control (SBC);
the DF3 is a Media GateWay (MGW) / Media GateWay Control Function (MGCF);
the information of the port which receives the session refers to identification information of the port of the DF3 and/or the IP address information of the port; and
the network in the bearer layer is at least one kind of the following networks: a Gigabyte System Network (GSN), a Wireless Local Area Network (WLAN), and a Local Area Network (LAN).

Those skilled in the art should understand that, the apparatus for intercepting the media contents in the IP Multimedia Subsystem shown in FIG. 5 of the present document is designed for implementing the above-mentioned method for intercepting the media contents in the IP Multimedia Subsystem, and the implementation functions of all above-mentioned processing unit / processing subunit / processing module can be understood by referring to the relevant description of the above-mentioned method for intercepting the media contents in the IP Multimedia Subsystem. The function of every processing unit in the figure can be implemented through the procedures running on the processor, and also can be implemented through the specific logical circuit.

The above description is only the preferred embodiments of the present document and is not intended to limit the protection scope of the present invention which is defined by the appended claims.

## Claims

1. A method for intercepting media contents in an Internet Protocol, IP, Multimedia Subsystem, IMS, wherein, the IMS connects with a bearer layer network through an IMS-Access GateWay/ Interconnection Border Control Function, IBCF; and wherein the IMS-Access GateWay/IBCF cannot perform a media negotiation with a data delivery function 3, DF3, of the IMS; the method comprises:
after receiving a session interception request, the IMS determining information of a port of the DF3 which reports communication contents, CC, of a session to be intercepted for the IMS-Access GateWay/IBCF, and informing the IMS-Access GateWay/IBCF of the determined port of the DF3; and
the IMS-Access GateWay/IBCF reporting the CC of the session to the determined port of the DF3.

2. The method according to claim 1, determining information of a port of the DF3 which reports communication contents, CC, of a session to be intercepted for the IMS-Access GateWay/IBCF refers to:
a call content trigger function, CCTF, in the IMS determining that the session is intercepted, performing a media negotiation with the DF3 through a call content negotiate interface, CCNI, determining the information of a port of the DF3 which receives the session, and informing the IMS-Access GateWay.

3. The method according to claim 2, determining the information of a port of the DF3 which receives the session refers to:
the CCTF sending an INVITE message to the DF3 through the CCNI to request for information of the port which receives the CC and is assigned dynamically; and
the DF3 replying with a 200OK response message to the CCTF, wherein, the 200OK response message carries information of the port which receives the session and is assigned dynamically.

4. The method according to claim 3, wherein, the CCTF is an Application Server, AS / Serving-Call Session Control Function, S-CSCF, or a Proxy Call Session Control Function, P-CSCF.

5. The method according to claim 4, wherein, when the CCTF is the AS/S-CSCF, informing the IMS-Access GateWay of the information of the port of the session refers to: the AS/S-CSCF sends an INFO message to the IMS-Access GateWay through a call content control interface, CCCI, wherein, the INFO message carries information of the port which receives the session.

6. The method according to claim 4, wherein, when the CCTF is the P-CSCF, informing the IMS-Access GateWay of the information of the port of the session refers to: the P-CSCF sends an H.248 message to the IMS-Access GateWay through an owned internal private interface in the form of an application layer gateway, ALG, wherein, the H.248 message carries information of the port which receives the session.

7. The method according to any one of claims 1 to 6, wherein, the IMS-Access GateWay/IBCF is a Session Border Control, SBC; the DF3 is a Media GateWay, MGW / Media GateWay Control Function, MGCF;
the information of the port which receives the session refers to identification information of the port of the DF3 and/or IP address information of the port; and
the bearer layer network is at least one kind of the following networks: a Gigabyte System Network, GSN a Wireless Local Area Network, WLAN, and a Local Area Network, LAN.

8. An apparatus for intercepting media contents in an Internet Protocol, IP, Multimedia Subsystem, IMS, applied in a system in which the IMS connects with a bearer layer network through an IMS-Access GateWay/Interconnection Border Control Function, IBCF; wherein, the IMS-Access GateWay/IBCF cannot perform a media negotiation with a data delivery function 3, DF3, of the IMS; the apparatus comprises a receiving unit, a determining unit and an informing unit located in the IMS, and a reporting unit located in the IMS-Access GateWay/IBCF;
the receiving unit is configured to receive a session interception request;
the determining unit is configured to determine information of a port of the DF3 which reports communication contents, CC, of a session to be intercepted for the IMS-Access GateWay/IBCF;
the informing unit is configured to inform the IMS-Access GateWay/IBCF of the information of the determined port of the DF3; and the reporting unit is configured to report the CC of the session to the determined port of the DF3.

9. The apparatus according to claim 8, wherein, the determining unit and the informing unit are located in a call content trigger function, CCTF, in the IMS, and the determining unit further comprises:
a determining subunit, configured to trigger a media negotiation subunit when determining that the session is intercepted; and
the media negotiation subunit, configured to perform a media negotiation with the DF3 through a call content negotiate interface, CCNI, wherein, the determining subunit determines the information of the port of the DF3 which receives the session according to a media negotiation result of the media negotiation subunit.

10. The apparatus according to claim 9, wherein, the media negotiation subunit further comprises a sending module and a replying module;
the sending module is located in the CCTF, configured to send an INVITE message to the DF3 through the CCNI to request for information of the port which receives the CC and is assigned dynamically;
the replying module is located in the DF3, configured to reply with a 200OK response message to the CCTF, wherein, the 200OK response message carries information of the port which receives the session and is assigned dynamically.

11. The apparatus according to claim 10, wherein, the CCTF is an Application Server, AS / Serving-Call Session Control Function S-CSCF, or a Proxy Call Session Control Function, P-CSCF.

12. The apparatus according to claim 11, wherein, when the CCTF is the AS/S-CSCF, the informing unit further sends an INFO message to the IMS-Access GateWay through a call content control interface, CCCI, and the INFO message carries the information of the port which receives the session.

13. The apparatus according to claim 11, wherein, when the CCTF is the P-CSCF, the informing unit further sends an H.248 message to the IMS-Access GateWay through an owned internal private interface in the form of an application layer gateway, ALG, and the H.248 message carries the information of the port which receives the session.

14. The apparatus according to any one of claims 8 to 13, wherein, the IMS-Access GateWay/IBCF is a Session Border Control, SBC; the DF3 is a Media GateWay, MGW / Media GateWay Control Function, MGCF; the information of the port which receives the session refers to identification information of the port of the DF3 and/or IP address information of the port; and
the bearer layer network is at least one kind of the following networks: a Gigabyte System Network, GSN, a Wireless Local Area Network, WLAN, and a Local Area Network, LAN.

## Patentansprüche

1. Verfahren zum Abfangen von Medieninhalten in einem Internetprotokoll-, IP, Multimedia Subsystem, IMS, wobei sich das IMS mit einem Trägerschichtnetzwerk durch ein(e) IMS-Access GateWay/Interconnection Border Control Function, IBCF, verbindet; und
wobei das bzw. die IMS-Access GateWay/IBCF keine Medienaushandlung mit einer Datenübermittlungsfunktion 3, DF3, des IMS durchführen kann;
wobei das Verfahren Folgendes umfasst:
nach dem Empfangen einer Sitzungsabfanganfrage bestimmt das IMS Informationen eines Ports der DF3, welcher Kommunikationsinhalte, CC, einer Sitzung meldet, die für das bzw. die IMS-Access GateWay/IBCF abgefangen werden sollen und informiert das bzw. die IMS-Access GateWay/IBCF über den bestimmten Port der DF3; und
das bzw. die IMS-Access GateWay/IBCF meldet die CC der Sitzung dem bestimmten Port der DF3.

2. Verfahren nach Anspruch 1, wobei sich das Bestimmen von Informationen eines Ports der DF3, welcher Kommunikationsinhalte, CC, einer Sitzung meldet, die für das bzw. die IMS-Access GateWay/IBCF abgefangen werden sollen, auf Folgendes bezieht:
eine Call Content Trigger Function, CCTF, in dem IMS bestimmt, dass die Sitzung abgefangen wird, eine Medienaushandlung wird mit der DF3 durch eine Call Content Negotiate Interface, CCNI, durchgeführt, die Informationen eines Ports der DF3, welcher die Sitzung empfängt, werden bestimmt, und das IMS-Access GateWay wird informiert.

3. Verfahren nach Anspruch 2, wobei sich das Bestimmen der Informationen eines Ports der DF3, welcher die Sitzung empfängt, auf Folgendes bezieht:
die CCTF sendet durch die CCNI eine INVITE-Nachricht an die DF3, um Informationen des Ports anzufordern, welcher die CC empfängt und dynamisch zugewiesen wird; und
die DF3 antwortet mit einer 2000K-Antwortnachricht auf die CCTF, wobei die 2000K-Antwortnachricht Informationen des Ports transportiert, welcher die Sitzung empfängt und dynamisch zugewiesen wird.

4. Verfahren nach Anspruch 3, wobei die CCTF eine Anwendungsserver-, AS/Serving-Call Session Control Function, S-CSCF, oder eine Proxy Call Session Control Function, P-CSCF, ist.

5. Verfahren nach Anspruch 4, wobei, wenn die CCTF die AS/S-CSCF ist, sich das Informieren des IMS-Access GateWays über die Informationen des Ports der Sitzung auf Folgendes bezieht:
die AS/S-CSCF sendet durch eine Call Content Control Interface, CCCI, eine INFO-Nachricht an das IMS-Access GateWay, wobei die INFO-Nachricht Informationen des Ports transportiert, welcher die Sitzung empfängt.

6. Verfahren nach Anspruch 4, wobei, wenn die CCTF die P-CSCF ist, sich das Informieren des IMS-Access GateWays über die Informationen des Ports der Sitzung auf Folgendes bezieht:
die P-CSCF sendet durch eine eigene interne private Schnittstelle in Form eines Application Layer Gateways, ALG, eine H.248-Nachricht an das IMS-Access GateWay, wobei die H.248-Nachricht Informationen des Ports transportiert, welcher die Sitzung empfängt.

7. Verfahren nach einem der Ansprüche 1 bis 6, wobei das bzw. die IMS-Access GateWay/IBCF eine Session Border Control, SBC, ist;
die DF3 ein(e) Media GateWay, MGW/Media GateWay Control Function, MGCF, ist;
sich die Informationen des Ports, welcher die Sitzung empfängt, auf Identifikationsinformationen des Ports der DF3 und/oder IP-Adressinformationen des Ports beziehen; und
das Trägerschichtnetzwerk mindestens einer Art der folgenden Netzwerke entspricht:
einem Gigabyte System Network, GSN, einem Wireless Local Area Network, WLAN und einem Local Area Network, LAN.

8. Vorrichtung zum Abfangen von Medieninhalten in einem Internetprotokoll-, IP, Multimedia Subsystem, IMS, die in einem System angewendet wird, in dem sich das IMS mit einem Trägerschichtnetzwerk durch ein(e) IMS-Access GateWay/Interconnection Border Control Function, IBCF, verbindet;
wobei das bzw. die IMS-Access GateWay/IBCF keine Medienaushandlung mit einer Datenübermittlungsfunktion 3, DF3, des IMS durchführen kann;
die Vorrichtung eine Empfangseinheit, eine Bestimmungseinheit und eine Informationseinheit, die sich in dem IMS befinden und eine Meldeeinheit umfasst, die sich in dem bzw. der IMS-Access GateWay/IBCF befindet;
die Empfangseinheit konfiguriert ist, um eine Sitzungsabfanganfrage zu empfangen;
die Bestimmungseinheit konfiguriert ist, um Informationen eines Ports der DF3 zu bestimmen, welcher Kommunikationsinhalte, CC, einer Sitzung meldet, die für das bzw. die IMS-Access GateWay/IBCF abgefangen werden sollen;
die Informationseinheit konfiguriert ist, um das bzw. die IMS-Access GateWay/IBCF über die Informationen des bestimmten Ports der DF3 zu informieren; und
die Meldeeinheit konfiguriert ist, um die CC der Sitzung dem bestimmten Port der DF3 zu melden.

9. Vorrichtung nach Anspruch 8, wobei sich die Bestimmungseinheit und die Informationseinheit in einer Call Content Trigger Function, CCTF, in dem IMS befinden und die Bestimmungseinheit ferner Folgendes umfasst:
eine Bestimmungsuntereinheit, die konfiguriert ist, um eine Medienaushandlungsuntereinheit zu triggern, wenn bestimmt wird, dass die Sitzung abgefangen wurde; und
die Medienaushandlungsuntereinheit, die konfiguriert ist, um eine Medienaushandlung mit der DF3 durch eine Call Content Negotiate Interface, CCNI, durchzuführen, wobei die Bestimmungsuntereinheit die Informationen des Ports der DF3, welcher die Sitzung empfängt, gemäß einem Medienaushandlungsergebnis der Medienaushandlungsuntereinheit bestimmt.

10. Vorrichtung nach Anspruch 9, wobei die Medienaushandlungsuntereinheit ferner ein Sendemodul und ein Antwortmodul umfasst;
sich das Sendemodul in der CCTF befindet, die konfiguriert ist, um durch die CCNI eine INVITE-Nachricht an die DF3 zu senden, um Informationen des Ports anzufordern, welcher die CC empfängt und dynamisch zugewiesen wird;
sich das Antwortmodul in der DF3 befindet, die konfiguriert ist, um mit einer 200OK-Antwortnachricht auf die CCTF zu antworten, wobei die 2000K-Antwortnachricht Informationen des Ports transportiert, welcher die Sitzung empfängt und dynamisch zugewiesen wird.

11. Vorrichtung nach Anspruch 10, wobei die CCTF eine Anwendungsserver-, AS/Serving-Call Session Control Function, S-CSCF, oder eine Proxy Call Session Control Function, P-CSCF, ist.

12. Vorrichtung nach Anspruch 11, wobei, wenn die CCTF die AS/S-CSCF ist, die Informationseinheit ferner durch eine Call Content Control Interface, CCCI, eine INFO-Nachricht an das IMS-Access GateWay sendet und die INFO-Nachricht die Informationen des Ports transportiert, welcher die Sitzung empfängt.

13. Vorrichtung nach Anspruch 11, wobei, wenn die CCTF die P-CSCF ist, die Informationseinheit ferner durch eine eigene interne private Schnittstelle in Form eines Application Layer Gateways, ALG, eine H.248-Nachricht an das IMS-Access GateWay sendet und die H.248-Nachricht die Informationen des Ports transportiert, welcher die Sitzung empfängt.

14. Vorrichtung nach einem der Ansprüche 8 bis 13, wobei das bzw. die IMS-Access GateWay/IBCF eine Session Border Control, SBC, ist;
die DF3 ein(e) Media GateWay, MGW/Media GateWay Control Function, MGCF, ist;
sich die Informationen des Ports, welcher die Sitzung empfängt, auf Identifikationsinformationen des Ports der DF3 und/oder IP-Adressinformationen des Ports beziehen; und
das Trägerschichtnetzwerk mindestens einer Art der folgenden Netzwerke entspricht:
einem Gigabyte System Network, GSN, einem Wireless Local Area Network, WLAN und einem Local Area Network, LAN.

## Revendications

1. Méthode d'interception de contenu de médias dans un sous-système multimédia - IMS - d'un protocole Internet - IP -, l'IMS étant connecté à un réseau de couche support par le biais d'une passerelle d'accès - IMS/fonction de commande de bordure d'interconnexion, IBCF ; et
la passerelle d'accès - IMS/la fonction de commande de bordure d'interconnexion, IBCF, ne pouvant effectuer une négociation de médias avec une fonction de diffusion de données 3, DF3, de l'IMS ;
la méthode comprenant :
après la réception d'une demande d'interception de session, la détermination, par l'IMS, des informations sur un port du DF3 communiquant des contenus de communication, CC, d'une session à intercepter pour la passerelle d'accès - IMS/1'IBCF du port déterminé du DF3 ; et communiquant à la passerelle d'accès - IMS/IBCF le port déterminé du DF3 ; et
la communication par la passerelle d'accès - IMS/1'IBCF des CC de la session au port déterminé du DF3.

2. Méthode selon la revendication 1, la détermination d'informations sur un port du DF3 communiquant des contenus de communication, CC, d'une session à intercepter pour la passerelle d'accès - IMS/l'IBCF se rapportant à :
une fonction de déclenchement de contenu d'appel, CCTF, dans l'IMS déterminant que la session est interceptée, l'exécution d'une négociation de médias avec le DF3 par le biais d'une interface de négociation de contenu d'appel, CCNI, déterminant les informations sur un port du DF3 recevant la session, et communiquant la passerelle d'accès - IMS.

3. Méthode selon la revendication 2, la détermination des informations sur un port du DF3 recevant la session se rapportant à :
l'envoi par CCTF d'un message d'INVITE au DF3 par le biais du CCNI pour solliciter des informations sur le port recevant le CC, et étant attribué dynamiquement ; et
le DF3 répondant avec un message de réponse 200OK au CCTF, le message de réponse 200OK contenant des informations sur le port recevant la session, et étant attribué dynamiquement.

4. Méthode selon la revendication 3, le CCTF étant une fonction de contrôle de session d'appel de desserte serveur d'application d'un serveur d'application AS, S-CSCF, ou une fonction de contrôle de session d'appel mandataire, P-CSCF.

5. Méthode selon la revendication 4, dans laquelle lorsque le CCTF est l'AS/S-CSCF, la communication à la passerelle d'accès IMS des informations sur le port de la session se rapporte à :
l'envoi par l'AS/S-CSCF d'un message INFO à la passerelle d'accès IMS par le biais d'une interface de contrôle du contenu d'appel, CCCI, le message INFO contenant des informations sur le port recevant la session.

6. Méthode selon la revendication 4, dans laquelle lorsque le CCTF est le P-CSCF, la communication à la passerelle d'accès IMS des informations sur le port de la session se rapporte à :
l'envoi par le P-CSCF d'un message H.248 à la passerelle d'accès IMS à travers une interface privée interne détenue sous forme d'une passerelle de couche d'application, ALG, dans laquelle le message H.248 contient des informations sur le port recevant la session.

7. Méthode selon une quelconque des revendications 1 à 6, dans laquelle la passerelle d'accès IMS/IBCF est une commande de bordure de session, SBC ;
le DF3 étant une passerelle média, MGW/ fonction de contrôle passerelle média, MGCF ;
les informations sur le port recevant la session se rapportent aux informations d'identification du port du DF3 et/ou des informations d'adresse IP du port ; et
le réseau de couche support étant au moins un type des réseaux suivants :
un réseau de système gigaoctets, GSN, un réseau local sans fil, WLAN, et un réseau local, LAN.

8. Appareil d'interception de contenu de médias dans un sous-système multimédia - IMS - d'un protocole Internet - IP -, appliqué à un système dans lequel l'IMS se connecte à un réseau de couche support par le biais d'une passerelle d'accès - IMS/fonction de commande de bordure d'interconnexion, IBCF ; et
la passerelle d'accès - IMS/la fonction de commande de bordure d'interconnexion, IBCF, ne pouvant effectuer une négociation de médias avec une fonction de diffusion de données 3, DF3, de l'IMS ;
l'appareil comprenant une unité de réception, une unité de détermination, et une unité d'information situées dans l'IMS, et une unité de rapport située dans la passerelle d'accès IMS/IBCF ;
l'unité de réception étant configurée pour recevoir une demande d'interception de session ; l'unité de détermination étant configurée pour déterminer des informations sur un port du DF3 communiquant des contenus de communications, CC, d'une session à intercepter pour la passerelle d'accès IMS/IBCF ;
l'unité d'information étant configurée pour communiquer à la passerelle d'accès IMS/IBCF des informations sur le port déterminé du DF3 ; et
l'unité de rapport étant configurée pour rendre compte du CC de la session au port déterminé du DF3.

9. Appareil selon la revendication 8, l'unité de détermination et l'unité d'information étant situées dans une fonction de une fonction de déclenchement de contenu d'appel, CCTF, dans l'IMS, et l'unité de détermination comprenant en outre :
une sous-unité de détermination, configurée pour déclencher une sous-unité de négociation de médias lors de la détermination de l'interception de la session ; et
la sous-unité de négociation de médias, configurée pour effectuer une négociation de médias avec le DF3 par le biais d'un interface de négociation de contenu de l'appel, CCNI, la sous-unité de détermination déterminant les informations du port du DF3 recevant la session en fonction du résultat d'une négociation de médias de la sous-unité de négociation de médias.

10. Appareil selon la revendication 9, la sous-unité de négociation de médias comprenant en outre un module d'envoi et un module de réponse ;
module d'envoi étant situé dans le CCTF, configuré pour envoyer un message d'INVITE au DF3 par le biais du CCNI pour demander des informations sur le port recevant le CC, et étant affecté dynamiquement ;
le module de réponse étant situé dans le DF3, configuré pour répondre, avec un message de réponse 200OK, au CCTF, le message de réponse 200OK contenant des informations sur le port recevant la session, et étant affecté dynamiquement.

11. Appareil selon la revendication 10, le CCTF étant une fonction de contrôle de session d'appel de desserte serveur d'application d'un serveur d'application AS, S-CSCF, ou une fonction de contrôle de session d'appel mandataire, P-CSCF.

12. Appareil selon la revendication 11, dans lequel, lorsque le CCTF est l'AS/S-CSCF, l'unité d'information envoie en outre un message INFO à la passerelle d'accès IMS par le biais d'une interface de contrôle du contenu d'appel, CCCI, le message INFO contenant des informations sur le port recevant la session.

13. Appareil selon la revendication 11, dans laquelle, lorsque le CCTF est le P-CSCF, l'unité d'information envoie en outre un message H.248 à la passerelle d'accès IMS à travers une interface privée interne détenue sous forme d'une passerelle de couche d'application, ALG, dans laquelle le message H.248 contient des informations sur le port recevant la session.

14. Appareil selon une quelconque des revendications 8 à 13, la passerelle d'accès IMS/IBCF étant une commande de bordure d'interconnexion, SBC ;
le DF3 étant une passerelle media, MGW/ fonction de contrôle passerelle media, MGCF ;
les informations sur le port recevant la session se rapportent aux informations d'identification du port du DF3 et/ou des informations d'adresse IP du port ; et
le réseau de couche support étant au moins un type des réseaux suivants :
un réseau de système gigaoctets, GSN, un réseau local sans fil, WLAN, et un réseau local, LAN.
